(19) Europäisches Patentamt

European Patent Office

Office européen des brevets

(11) Veröffentlichungsnummer: **0 220 448 B1**

(12) **EUROPÄISCHE PATENTSCHRIFT**

(45) Veröffentlichungstag der Patentschrift: **21.11.91**

(51) Int. Cl.⁵: **C04B 41/48**

(21) Anmeldenummer: **86112587.0**

(22) Anmeldetag: **11.09.86**

(54) **Verfahren zum Erhöhen der Festigkeit eines porösen Körpers.**

(30) Priorität: **25.09.85 DE 3534062**

(43) Veröffentlichungstag der Anmeldung:
**06.05.87 Patentblatt 87/19**

(45) Bekanntmachung des Hinweises auf die
Patenterteilung:
**21.11.91 Patentblatt 91/47**

(84) Benannte Vertragsstaaten:
**AT BE CH DE FR GB IT LI NL SE**

(56) Entgegenhaltungen:
**DE-A- 1 938 077**
**DE-A- 2 254 146**
**DE-B- 1 013 061**
**FR-A- 2 484 871**
**US-A- 3 980 604**

(73) Patentinhaber: **IBACH Steinkonservierung
GmbH & Co. Kommanditgesellschaft
Tannenstrasse 8
W-8609 Bischberg(DE)**

(72) Erfinder: **Ibach, Hermann Wolf
Stockder Strasse 138
W-5630 Remscheid 1(DE)**

(74) Vertreter: **Patentanwaltsbüro Cohausz & Florack
Schumannstrasse 97
W-4000 Düsseldorf 1(DE)**

## Beschreibung

Die Erfindung betrifft ein Verfahren zum Erhöhen der Festigkeit eines porösen Körpers und dessen Widerstandsfähigkeit gegen Verwitterung, bei dem zunächst dem porösen Körper in einem unter Vakuum zu setzenden Behälter Gase und Feuchtigkeit entzogen werden, worauf der Behälter mit einer aus einem härtbaren Kunstharz und Härter bestehenden Tränkflüssigkeit gefüllt wird oder bereits gefüllt war, der Körper völlig eingetaucht wird und in der Tränkflüssigkeit so lange unter Überdruck gehalten wird, bis die Tränkflüssigkeit ausreichend tief in den porösen Körper eingedrungen ist, worauf die Tränkflüssigkeit unter Beibehaltung des Überdrucks abgelassen und das Aushärten der vom porösen Körper aufgenommenen Tränkflüssigkeit durch Energiezufuhr innerhalb des Behälters bei Aufrechterhaltung des Überdrucks eingeleitet wird.

Aus dem deutschen Patent 22 54 146 ist es bekannt, poröse Körper, insbesondere Naturstein, vor Verwitterung dadurch dauerhaft zu schützen, daß der Körper vollständig mit einem organischen Harz, insbesondere Methylmethacrylat getränkt und anschließend polymerisiert wird. Vor dem Tränken wird der Körper einem möglichst hohen Vakuum ausgesetzt. Beim Eindringen des Gemisches aus monomerem Acryl und insbesondere einem geringen Anteil Polymer, führt das vorher in dem Stein angelegte Vakuum dazu, daß das eindringende Acryl verdampft, so daß im Verlaufe des Eindringens der Polymeranteil vorne in der Kapillare ständig größer wird, und damit so hoch viskos wird, daß es durch die engen Kapillaren nicht weiter vordringen kann. Kommt im ungünstigsten Fall noch ein hoher Eisenhydroxid-Anteil in dem Gestein dazu, so polymerisiert dieses Material sehr schnell und erhärtet vollständig. In dem Steininneren befindet sich nunmehr eine Blase aus vergastem Acryl, die beim Einleiten der Polymerisation über die Erhöhung der Temperatur nicht mehr polymerisieren kann. Das Ergebnis ist ein mangelhaft durchtränkter Stein mit einer harten Schale und einer Gasblase in der Mitte. Dies führt zwangsläufig zu Verspannungen im Stein; und damit zu Rissbildungen und zur Zerstörung des Objektes.

Aufgabe der Erfindung ist es, das Verfahren der eingangs genannten Art so zu verbessern, daß auch bei Körpern, insbesondere Steinen mit engen Kapillaren und bei Steinen mit einem hohen Eisenhydroxid-Anteil eine vollständige Durchtränkung erreicht wird.

Diese Aufgabe wird erfindungsgemäß dadurch gelöst, daß zum Erhöhen der Festigkeit eines porösen Körpers und dessen Widerstandsfähigkeit gegen Verwitterung, bei dem zunächst dem porösen Körper in einem unter Vakuum von maximal 30% zu setzenden Behälter Gase unnd Feuchtigkeit entzogen werden, worauf der Behälter mit einer aus einem härtbaren Kunstharz und Härter bestehenden Tränkflüssigkeit gefüllt wird oder bereits gefüllt war, der Körper völlig eingetaucht wird und in der Tränkflüssigkeit so lange unter Überdruck gehalten wird, bis die Tränkflüssigkeit ausreichend tief in den porösen Körper eingedrungen ist, worauf die Tränkflüssigkeit unter Beibehaltung des Überdrucks abgelassen und das Aushärten der vom porösen Körper aufgenommenen Tränkflüssigkeit durch Energiezufuhr innerhalb des Behälters bei Aufrechterhaltung des Überdrucks eingeleitet wird.

Bei einem solchen geringen Vakuum ist die Gefahr des Verdampfens wesentlich geringer. Das Eindringen des monomeren Acryl geschieht jetzt weniger über ein Einziehen nach Aufheben des Vakuums als über den anschließenden Überdruck. Es können alle Arten poröser Körper sicher bis ins Innerste vollständig getränkt werden; und dies auch bei sehr engen Kapillaren und Gesteinen mit hohem Eisenhydroxid-Anteil.

Ein zu frühes Polymerisieren wird zusätzlich dadurch verhindert, daß die Temperatur des Körpers auf maximal 40 Grad Celsius, vorzugsweise auf maximal 35 Grad Celsius gehalten wird. Auch wird hierzu vorgeschlagen, daß die Tränkflüssigkeit monomeres Acrylharz ist und die Menge des Härters maximal 1,5%, vorzugsweise maximal 1% beträgt.

Ein Ausführungsbeispiel des erfindungsgemäßen Verfahrens wird im folgenden näher beschrieben.

Ein poröser Stein, der verfestigt und gegen Verwittern widerstandsfähig gemacht werden soll, wird nach dem völligen Austrocknen in einen Behälter eingebracht, der unter Vakuum gesetzt wird. Das Vakuum beträgt -0,1 bis -0,3, vorzugsweise 0,2 bar. Hierdurch wird der Stein zum Teil entgast. Anschließend wird unter Aufrechterhalten des Vakuums die Tränkflüssigkeit in den Behälter gegeben, so daß der Stein vollständig in die Tränkflüssigkeit eingetaucht ist. Als Tränkflüssigkeit eignen sich lösungsmittelfreie Reaktionsharzsysteme, z. B. Acrylate, Polyester, Epoxyharze, Silicon-Kautschukharze, die einen Härter enthalten, der bis zu einer bestimmten Temperatur, insbesondere der Raumtemperatur, stabil ist, damit die Tränkflüssigkeit unterhalb dieser Temperatur nicht erhärtet und der bei Überschreiten, insbesondere starkem Überschreiten der bestimmten Temperatur, die Reaktion der Reaktionsharzsysteme und damit deren Aushärten einleitet. Für ein nicht zu frühes Härten ist es von Vorteil, wenn bei Acryl die Menge des Härters maximal 1,5%, vorzugsweise 1% beträgt.

Um zumindest einen Teil der im Kern komprimierten Luft herauszuziehen, wird der Druck noch einmal abgelassen und nunmehr ein hohes Vakuum aufgebaut von z.B. 80 bis 90%. Es zeigt sich, daß selbst bei Steinen mit sehr engen Kapillaren Restluft an der Tränkflüssigkeit vorbeigezogen werden kann.

Nachdem der Stein vollständig in der Tränkflüssigkeit liegt, wird der Behälter unter Überdruck, z. B. unter 15 atü; gesetzt. Dieser Überdruck bewirkt, daß die Tränkflüssigkeit schneller und tiefer in den porösen Körper eindringt als es mit Atmosphärendruck möglich wäre. Da der Stein vorher entgast war und unter Vakuum in die Tränkflüssigkeit eingetaucht wurde, würde Atmosphärendruck nur ein mäßiges tiefes und langsames Eindringen in die Poren des Steines bewirken. Der Überdruck wird mit Inertgas, insbesondere durch Stickstoff oder ein Edelgas aufgebaut und für eine bestimmte Zeit aufrechterhalten, die ein genügend tiefes Eindringen der Tränkflüssigkeit in den Stein ermöglicht. Danach wird die Tränkflüssigkeit abgelassen, wobei aber der Überdruck im Behälter aufrechterhalten wird. Das Aufrechterhalten des Überdrucks ist notwendig, um die vom Stein aufgenommene Tränkflüssigkeit nicht aus den Poren des Steines austreten zu lassen.

Während des gesamten Tränkvorgangs wird dafür gesorgt, daß das Vakuum maximal -0,1 bis -0,3 bar, vorzugsweise -0,2 bar beträgt. Hierdurch wird verhindert, daß die Tränkflüssigkeit nicht vorzeitig erhärtet.

Danach wird die Temperatur des Gases im Behälter derart erhöht, daß das Aushärten eingeleitet wird. Statt die Temperatur im Behälter zu erhöhen, kann auch eine Flüssigkeit, die unter Aufrechterhaltung des Überdrucks im Behälter in den Behälter eingelassen worden ist, soweit erwärmt werden, bis die Reaktion der Tränkflüssigkeit und damit deren Aushärtung eingeleitet ist. Während des Aushärtens muß ebenfalls der Überdruck aus demselben Grunde aufrechterhalten werden. Eine erfindungsgemäß ausreichende Differenz zwischen der normalen Behandlungstemperatur und der Temperatur für das Einleiten des Aushärtens beträgt etwa 80 Grad Celsius. Nach beendetem oder nahezu beendetem Aushärten kann der Behälter vom Überdruck entlastet werden. Der auf diese Weise behandelte, poröse und brüchige Stein ist fest geworden und geschützt gegen aggressive Stoffe, insbesondere gegen Verwitterung. Da die abgelassene Tränkflüssigkeit von selbst nicht aushärtet, kann sie über beliebig lange Zeit zum Tränken poröser Körper ohne Verlust an Wirksamkeit verwendet werden.

Es kann in Kauf genommen werdend daß durch den hohen Überdruck eventuell im Stein und in den Kapillaren befindliche Luft komprimiert wird. Nachdem die Polymerisation erfolgt, stehen die im Stein verbliebenen Luftblasen unter Überdruck. Da Acrylharz dampfdurchlässig ist, baut sich dieser Überdruck mit der Zeit ab. Im Gegensatz zu bisher sind diese komprimierten Luftblasen aber kleiner als die durch das Verdampfen entstehenden Gasblasen.

## Patentansprüche

1. Verfahren zum Erhöhen der Festigkeit eines porösen Körpers und dessen Widerstandsfähigkeit gegen Verwitterung, bei dem zunächst dem porösen Körper in einem unter Vakuum zu setzenden Behälter Gase und Feuchtigkeit entzogen werden, worauf der Behälter mit einer aus einem härtbaren Kunstharz und Härter bestehenden Tränkflüssigkeit gefüllt wird oder bereits gefüllt war, der Körper völlig eingetaucht wird und in der Tränkflüssigkeit so lange unter Überdruck gehalten wird, bis die Tränkflüssigkeit ausreichend tief in den porösen Körper eingedrungen ist, worauf die Tränkflüssigkeit unter Beibehaltung des Überdrucks abgelassen und das Aushärten der vom porösen Körper aufgenommenen Tränkflüssigkeit durch Energiezufuhr innerhalb des Behälters bei Aufrechterhaltung des Überdrucks eingeleitet wird, **dadurch gekennzeichnet,** daß das Vakuum maximal -0,1 bis -0,3 bar, vorzugsweise -0,2 bar beträgt.

2. Verfahren nach Anspruch 1, **dadurch gekennzeichnet,** daß die Temperatur des Körpers auf maximal 40 Grad Celsius, vorzugsweise auf maximal 35 Grad Celsius gehalten wird.

3. Verfahren nach Anspruch 1 oder 2, **dadurch gekennzeichnet,** daß die Tränkflüssigkeit monomeres Acrylharz ist und die Menge des Härters maximal 1,5%, vorzugsweise maximal 1% beträgt.

## Claims

1. A process for increasing the solidity of a porous body and its resistivity to weathering, wherein gases and moisture are removed from the porous body in a tank to be evacuated, whereafter the tank is filled or was already filled with an impregnating liquid consisting of a hardenable synthetic resin and a hardener, the body is completely immersed and retained in the impregnating liquid until the impregnating liquid has penetrated deeply enough into the porous body, whereafter the impregnating liquid is discharged, while maintaining the excess pressure, and the hardening of the impregnating liquid absorbed by the porous body is initiated by the supply of energy inside the tank, while maintaining the excess pressure, characterized in that the vacuum is at most -0.1 to -0.3 bar, preferably -0.2 bar.

2. A process according to claim 1, characterized in that the temperature of the body is maintained at a maximum of 40° C, preferably at a maximum of 35° C.

3. A process according to claims 1 or 2, characterized in that the impregnating liquid is monomeric acrylic resin and the quantity of the hardener is at most 1.5%, preferably at most 1%.

**Revendications**

1. Procédé pour augmenter la solidité d'un corps poreux et sa capacité de résistance aux agents atmosphériques, dans lequel les gaz et l'humidité sont d'abord extraits du corps poreux dans un récipient à mettre sous vide, après quoi le récipient est rempli ou était déjà rempli d'un liquide d'imprégnation constitué d'une résine synthétique durcissable et d'un durcisseur, le corps est complètement immergé et maintenu dans le liquide d'imprégnation, sous surpression, jusqu'à ce que le liquide d'imprégnation ait pénétré suffisamment profondément dans le corps poreux, après quoi le liquide d'imprégnation est vidé en maintenant la surpression et le durcissement du liquide d'imprégnation absorbé par le corps poreux est amorcé par amenée d'énergie à l'intérieur du récipient en conservant la surpression, caractérisé en ce que le vide est d'au maximum -0,1 à 0,3 bar, de préférence-0,2 bar.

2. Procédé selon la revendication 1, caractérisé en ce que la température du corps est maintenue à au maximum 40 degres Celsius, de préférence au maximum 35 degrés Celsius.

3. Procédé selon la revendication 1 ou 2, caractérisé en ce que le liquide d'imprégnation est une résine acrylique momomère et la quantité de durcisseur est d'au maximum 1,5%, de préférence d'au maximum 1%.